# EUROPEAN PATENT SPECIFICATION

(11) **EP 2 577 352 B1**
(45) Date of publication and mention of the grant of the patent: **23.04.2014**
(21) Application number: 10724702.5
(22) Date of filing: 26.05.2010
(51) Int. Cl.: G01T 3/06, G01T 5/00

(54) **DETECTOR AND METHOD FOR DETECTING NEUTRONS**
DETEKTOR UND VERFAHREN FÜR DEN NACHWEIS VON NEUTRONEN
DÉTECTEUR ET PROCÉDÉ DE DÉTECTION DE NEUTRONS

(43) Date of publication of application: 10.04.2013
(73) Proprietor: Universität Duisburg-Essen, 45145 Essen (DE)
(72) Inventor: MUKHERJEE, Bhaskar, 45147 Essen (DE); LAMBERT, Jamil, 45147 Essen (DE); HENTSCHEL, Reinhard, 45257 Essen (DE); FARR, Jonathan, Memphis TN 38105-367 (US)
(74) Representative: Cohausz Hannig Borkowski Wißgott
(86) International application number: PCT/EP2010/003184
(87) International publication number: WO 2011/147427

(56) References cited:
- US-A- 4 090 083
- US-A1- 2010 046 690

## Description

The invention relates to a detector and a method for detecting neutrons.

The smuggling of nuclear contraband material through road, railway and maritime networks poses a great concern to the modern civilised society of today. There are, broadly, two types of nuclear contrabands of concern: (a) Gamma ray emitting radioactive scrap materials and orphan sources, which could be primarily used for the construction of "dirty bombs", and (b) Fissile material i.e. ²³⁹Pu (accompanied by ²⁴⁰Pu) usually generated in spent fuel elements of low-enriched uranium (LEU) power and research reactors, which could be used to develop potentially far more disastrous "nuclear devices".

The trafficking of an intact standard nuclear warhead through international check posts seems to be unfeasible; on the other hand, common civilian reactor grade plutonium (i.e. spent fuel elements) could be easily smuggled through transit points and be used to construct low-technology nuclear devices up to an explosive yield of approx. 0.52 kt (TNT equivalent).

While it is not very difficult to detect gamma ray emitting material with well known detectors it is on the other hand even more complicated to detect neutrons emitted by fissile material.

In the state of the art it is known to use active neutron detectors see for example US2010/0046690. As in most cases the level of spontaneous fission from the smuggled nuclear materials is not high enough for reliable detection. In this kind of detector the area of interest, i.e. a suspected cargo concealing those materials is irradiated with fast neutrons from a dedicated particle accelerator, in order to induce nuclear fission resulting in the production of secondary neutrons and gamma rays. Custom designed neutron and gamma detectors are used to assess those secondary radiations thereby identifying the nuclear contraband. Accordingly these kind of detectors are dangerous themselves, expensive and only suitable to detect bigger amounts of fissile material.

Furthermore passive detectors are known. As mentioned earlier the reactor grade plutonium containing 5.8% (per weight fraction) ²⁴⁰Pu, belongs to one of the most notorious illicit nuclear weapon materials and emits spontaneous fission neutrons. A passive detector can be used to identify the contraband by detecting these spontaneous fission neutrons.

²⁴⁰pu emits "spontaneous fission" neutrons (~ 2.5 x 10⁶ neutrons s⁻¹kg⁻¹) and this neutron signature could be detected using a suitable neutron detector resulting in the identification of smuggled fissile contraband.

The implementation of an efficient detector or sensing devices for swift and foolproof identification of clandestine trafficking of nuclear materials like plutonium, uranium and thorium has now became imperative to defy nuclear proliferation and associated terrorism threats.

Low cost, small size and simple operation are the distinct advantages of a passive nuclear contraband detector over an active detector, however, currently the major limitation is their low sensitivity, specified as lowest level of detection (LLD).

As only 4.8 kg smuggled reactor grade plutonium will be sufficient to construct a "low technology" nuclear device, the potential terrorist organisation could try to traffic the plutonium in small aliquots to avoid detection by conventional passive nuclear contraband detectors. This poses the greatest challenge of an efficient passive nuclear contraband detector.

It is an object of the invention to provide a detector and a method for detecting neutrons having high detection sensitivity and thus providing the possibility of detecting very little amounts of fissile material in particular in the range of less than 10 gramms preferably less than 3 gramms. In particular it is an object of the invention to provide a detector and method capable of detecting small amounts of fissile contraband.

According to the invention this object is solved with a method wherein neutrons emerging from an area of interest, for example from suspected cargo, parcels etc. in a first step are decelerated to thermal energy by means of a moderator material. For this invention thermal neutrons are deemed to have an energy less than 100 meV. At room temperature the thermal energy of neutrons is 0.025 eV.

During deceleration gamma rays are emitted by the moderator material, in particular due to scattering. Any kind of suitable moderator material may be used for this purpose. Preferably hydrogen containing materials may be used, in particular polyethylene, preferably in a high dense pure form or with admixtures. The thickness of the moderator material is to be chosen in order to avoid total capture of the neutrons and to provide thermal neutrons for further processing according to the invention. The moderating distance in polyethylene may be chosen in the range of 10 to 20 cm.

Since the production of gamma rays in the moderator material cannot be avoided these gamma rays will be furthermore attenuated preferably totally shielded. Any gamma ray attenuating/shielding material is suitable for this purpose, for example lead, gold, wolfram.

In order to get an information about this undesired background gamma radiation - in case there is gamma radiation left after shielding - according to the invention a first and a second sensor device which are both sensitive to gamma rays are irradiated with the attenuated gamma rays.

Such a sensor device according to the invention may be any device that is capable of providing a readable measure that is dependent, preferably proportional to the total gamma ray fluence received within in a certain time interval. A preferred sensor is an integrating sensor, such as thermoluminescent crystals or optically stimulatable crystals.

As an essential feature of the invention the thermalised/decelerated neutrons are captured with Gadolinium and thus additional gamma rays are produced in a neutron-Gadolinium-interaction. It has been proven that Gadolinium has a very high if not the highest known neutron capture cross section for thermal neutrons. If any other material may become available with a higher or at least similar neutron capture cross section such a material may be used instead as an equivalent to Gadolinium.

According to the method of the invention only the first sensor device will be irradiated with this additional gamma rays produced in Gadolinium and this additional gamma radiation is shielded or at least strongly attenuated in order to prevent substantive irradiation of the second sensor.

As a consequence both sensors devices are sensing or measuring the gamma radiation produced during deceleration in the moderator and any background gamma radiation but only the first sensor device is - in addition - sensing or measuring the additional gamma radiation caused only by the neutron-Gadolinium-interaction.

According to the invention a signal proportional to the received total fluence of gamma rays is read from both sensor devices respectively. These two signals may be compared in order to receive an information about the total neutron fluence received within a certain time. For example a comparison may be performed by simply subtracting the signal of the second sensor device from the signal of the first sensor device. Accordingly the result is only representing the gamma ray fluence produced by the neutron-Gadolinium-interaction and thus may be use as a measure for the neutron fluence.

In an improvement of the invention the signals of first and second sensor devices are compared and an alarm signal may be generated dependent upon the result of comparison. Accordingly the method will provide a measure to detect fissile material in the vicinity of the sensor devices.

In a possible embodiment the sensor device may be composed of a thermoluminescent material, in particular carbon doped Alumina which has a very high sensitivity to gamma radiation. In such a case the signal of each of the two sensors devices may be read by means of heating the respective sensor device and connecting and detecting the emitted light.

In another improvement the sensor device may be composed of an optically stimulatable material, preferably also carbon doped Alumina (α-Al₂O₃:C). In this case a signal proportional to the total gamma radiation fluence received within an certain time may be generated by the sensor device by irradiation this device with a specific wavelength. After an irradiating pulse of this specific wavelength the device produces a light pulse of another wavelength for example by luminescence. According to this improvement of the invention an in-situ readout of the two sensor devices may be performed, for example periodically after a certain time of integrating the gamma radiation. Irradiation with and readout of the light pulses may be performed using optical fibers.

The object of the invention is also solved by means of a detector comprising a first and a second sensor device, both being sensitive to gamma rays, the first sensor device being covered with Gadolinium and the covered first sensor device and the second sensor device each being placed in a housing consisting of or at least comprising a gamma ray attenuating material, in particular lead. Furthermore the housings of both sensor devices are positioned adjacent to each other in a bulk of a neutron moderating material, in particular the middle of such a bulk. Using such a detector the method of the invention may be performed.

Covering the first sensor device with Gadolinium does mean that a neutron on its way from the point of emission to the sensor device will pass through the gadolinium material. In a preferred embodiment the sensor device is surrounded by Gadolinium material, i.e. covered on all sides. Such an improvement has the advantage that the detector according to the invention needs not to be aligned since neutrons of any direction will pass through the Gadolinium. For example a Gadolinium foil may be wrapped around the sensor device. It is also possible to form a pot of Gadolinium and a covering lid in order to place the sensor device in the pot and to close it with the lid.

In order to provide attenuation of the gamma radiation produced during deceleration a respective housing is provided for the first sensor covered with Gadolinium and the second sensor. Both housings may be formed commonly. In an improved embodiment the housings of the two sensor devices may be formed as a bottom part having adjacent recesses for the sensor devices and a cover part, both parts consisting of or at least comprising a gamma ray attenuating material, in particular lead, gold or wolfram.

It is essential to the invention that the housing of the first and / or the second sensor device also prevents gamma radiation produced in the Gadolinium at the site of the first sensor device to irradiate the second sensor device. This is best achieved if the gamma ray attenuating material of the housing surrounds the sensor devices in total.

A detector according to the invention will have a high reliability and sensitivity if the first and second sensor devices have the same sensitivity to gamma rays. This may be assured for example if the first and second sensor devices are empirically selected from a certain amount of sensor devices. For example all the sensor devices of this certain amount may be irradiated with the same total gamma radiation fluence from any kind of source and the retrieved signal from all the devices may be compared. It is then possible to choose two sensor devices of this total amount having the smallest difference of their respective signals, in particular of their glow curves if luminescent sensor devices are used.

As a preferred example the first and the second sensor device are selected from one of the following materials: Carbon doped Alumina, in particular α-Al₂O₃:C, Titan and Magnesium doped Lithium Fluorid, LiF:Ti, Mg or Dysprosium doped Calcium Fluorid, in particular CaF₂:Dy. Most preferred is Carbon doped Alumina due to its high sensitivity to gamma radiation.

In a preferred embodiment the bulk of the neutron moderating material consists of or comprises polyethylene in pure form or with admixtures. Of course all other suitable materials may be used. Preferably the bulk is in the form of a sphere or cylinder, in the middle of which the housings of the two sensor devices are placed adjacent to each other. In this embodiment high energy neutrons will have to pass through almost the same amount of moderating material until capture in the Gadolinium irrespective of their direction.

In order to read a signal from each of the two sensors devices in one possible embodiment theses two devices may be removed from their housings and the first sensor device will also be removed from the gadolinium casing. Both sensor devices may be heated thus producing luminescence that may be detected as a measure for gamma radiation and/or neutron fluence.

In order to provide instant measurement it is also possible to use optically stimulatable luminescent materials like the aforementioned crystals, in particular α-Al₂O₃:C

In such an embodiment at least one optical fiber is fed through the housing of each sensor device, in particular also through additional cover material of each sensor device in particular also through the gadolinium cover of the first sensor device, in particular also through the bulk of neutron moderating material, one end of the at least one fiber facing one of the sensor devices, the other end being connected / connectable to a light source and/or light detector.

Accordingly one or more stimulating light pulses may be applied to the crystals of the two sensor devices for generating luminescent light after switching off the pulse. The luminescent light of a different wavelength may be collected from the respective crystal with the same or another optical fiber and may be directed to a light detecting device, for example a multiplier or photo diode thus providing a measurable signal.

In order to improve such a luminescent signal it is also possible to place a reflective material around the sensor devices. Of course an optical fiber also needs to pass through this reflective material.

Two embodiments of the invention will be shown in the drawings.
- Fig 1a:: showing an embodiment using thermoluminescent detectors;
- Fig 1b:: showing an embodiment using optical stimulatable luminescent detectors;
- Fig 2:: showing the glow curves of two sensor devices;
- Fig 3:: showing the neutron fluence as a linear function of net thermoluminescence counts
- Fig 4:: showing a flow charts of the method.

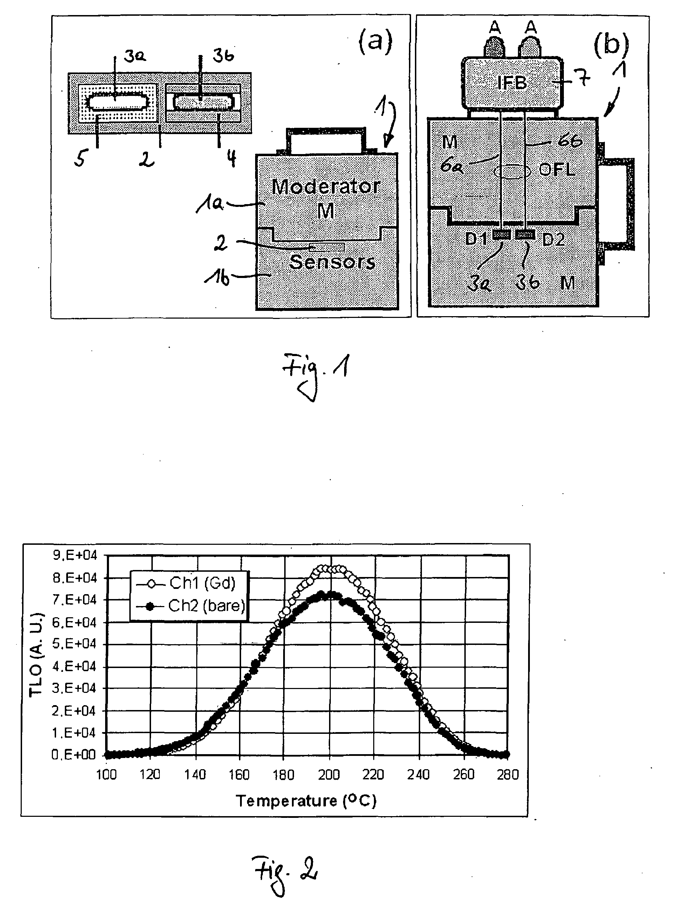

Figure 1 illustrates two possible embodiments. According to Figure 1 a a cylinder 1 made of polyethylene is used as a moderator to decelerate neutron received from any direction. The cylinder is separated into an upper part 1a and a lower part 1b. After lifting the upper part approximately in the middle of the cylinder 1 a housing 2 made of gamma radiation attenuating material - such as lead - is placed. This housing 2 receives a first sensor device 3a and a second sensor device 3b in respective recesses that are positioned adjacent to each other. The first sensor device 3a is cased in Gadolinium 5 that surrounds the sensor device 3a on all sides. In order to get almost the same position of the second sensor device 3b - which is not encased - this second sensor device 3b is placed between additional spacers 4 made of any material that does not effect gamma radiation, for example made of cardboard. In this embodiment the gamma radiation attenuating material also extends between the two sensor devices 3a, 3b in order to prevent gamma radiation produced in the Gadolinium 5 from irradiating the second sensor device 3b.

Furthermore in this embodiment the sensor devices are carbon doped Alumina, α-Al₂O₃:C.

Natural Gadolinium possesses a very high thermal neutron capture (n, γ) cross section and by combining this with the high sensitivity to gamma rays of carbon doped aluminium oxide thermoluminescence material, for example known from dosimeters TLD 500, a highly sensitive passive neutron detector has been developed. As the sensor devices two TLD 500 chips of exactly the same sensitivity were used. The first chip 3a was covered with a 0.2 mm thick Gadolinium foil 5 and the second one 3b with thin spacers 4 made of cardboard. Both chips were wrapped with 2x3 mm thick lead layers 2 to build the housing and placed in an 18 cm dia x 18 cm long polyethylene moderator cylinder 1.

Natural Gadolinium contains 15.65 % Gd-157 with an extremely high (255000 b) thermal neutron capture cross section. Thermalised neutrons interact with the Gadolinium foil producing 80 (11.5%) and 182 (13.6%) keV gamma rays via the ¹⁵⁷Gd(n, γ)¹⁵⁸Gd reaction, thereby exposing only the chip 3a.

However, both TLD chips 3a and 3b receive low-level exposure from the neutron capture gamma rays from polyethylene, attenuated by the lead housing 2. The signal of TLD chip 3b was subtracted from that of chip 3a, the difference was associated with the neutron dose. The signals are shown in figure 2 and measured during heating of the respective sensor device chips 3a and 3b. The higher glow curve corresponds to the signal of the chip 3a being covered with Gadolinium. The glow curves of the two TLD 500 chips 3a and 3b are received after they were irradiated with neutrons from a ²²⁶Ra/Be source to a dose equivalent of 48 µSv. The increased signal from chip 3a is due to the gamma rays produced in the Gadolinium foil due to the neutron fluence. The difference between the two glow curves (ACounts) relates to the integrated neutron fluence.

Evidently, the performance of this neutron monitor primarily depends on the same sensitivity of both chips. In this embodiment pairs of TLD500 chips from a pool of 150 chips have been randomly selected and irradiated with gamma rays from a ¹³⁷Cs source to 50 µSv. The thermoluminescence glow curves were recorded at a heating rate of 5°C per second using a Harshaw Model 3500 reader. The best chips 3a and 3b with the corresponding glow peak areas within ± 3.5% were selected.

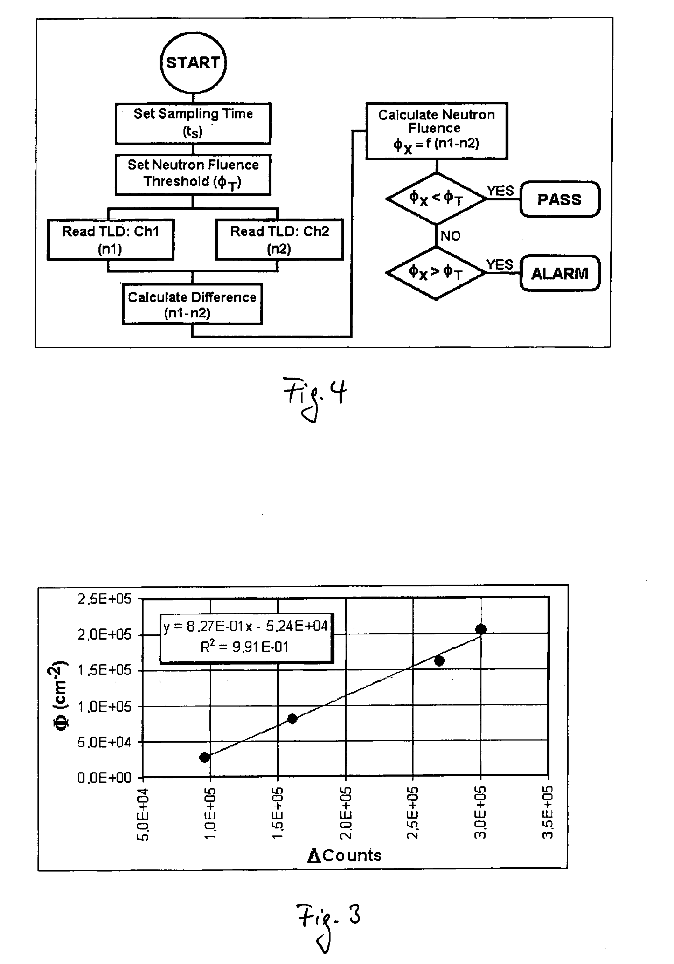

The neutron fluence detector according to figure 1a was irradiated with neutrons from a Ra/Be source to 6.6, 19, 38 and 48 µSv. The neutron dose equivalents were evaluated using superheated emulsion (bubble) detectors according to a known procedure described elsewhere. The TLD chips were taken out from the neutron detector and evaluated. The neutron fluence was calculated using the "neutron fluence to dose equivalent conversion factor" and plotted as a linear function of net TL counts as shown in figure 3. Figure 3 shows that there is a linear relation between the ACounts and the neutron fluence. The relation shown in this figure can then be used as a calibration curve to calculate the neutron fluence for a given ACounts. Which is the area of counts between the integrated signal of the two sensor devices.

A neutron fluence as little as 7.1 neutrons cm⁻²s⁻¹ for an integration period of 1 hour was measurable. This detection level is adequate enough to detect 3 gramms of reactor grade Plutonium from a distance of 1 meter. Accordingly an application of this detector is suggested for the passive detection of nuclear contraband for example at airports, postal offices and the like.

In figure 1b optically stimulatable sensor devices 3a and 3b are used instead of thermoluminescent devices. Again sensor 3a is surrounded by Gadolinium and both are placed in a lead housing and positioned adjacent in the polyethylene cylinder 1.

By means of optical fibers 6a and 6b the luminescence signal of the respective sensors devices 3a and 3b may be read by stimulation the devices 3a and 3b with a specific wavelength, green light in the case of carbon doped alumina. A light emitting device (not shown) and a light detection device (not shown) may be provided in an alarm generator 7 comparing the two received signals.

For a swift and fault free routine assessment of the neutron fluence a simple evaluation protocol for the TLD chips has been developed as follows and shown in figure 4. This is applicable for both embodiments of figures 1a and 1b.
(i) Set sampling time (ts),
(ii) Set neutron fluence threshold (Φt),
(iii) Read TLD chips ch1 (3a) and ch2 (3b),
(iv) Calculate the difference between the area under the glow peak curves for the two TLD chips (n1-n2),
(v) Use the difference between the two glow peaks to calculate neutron fluence (Φx) by using a linear fitting function, for example the one of Figure 3,
(vi) Compare calculated fluence Φx with threshold fluence Φt with the following outcome:
   (a) if Φx < Φt => PASS
   (b) if Φx > Φt => ALARM

## Claims

1. Neutron detector **comprising:**
a. a first (3a) and a second (3b) sensor device, both being sensitive to gamma rays;
b. the first sensor device (3a) being covered with Gadolinium (5);
c. the covered first sensor device (3a) and the second sensor device (3b) each being placed in a housing (2) consisting of or at least comprising a gamma ray attenuating material, in particular lead; **characterized in that**
d. the housings (2) of both sensor devices (3a, 3b) being positioned adjacent to each other in a bulk, in particular the middle of a bulk, of a neutron moderating material (1).

2. Detector according to claim 1, **wherein** the first and second sensor device (3a, 3b) have the same sensitivity to gamma rays, in particular the first and second sensor device (3a, 3b) being empirically selected from a certain amount of sensor devices (3a, 3b).

3. Detector according to any one of the preceding claims, **wherein** the first and the second sensor device (3a, 3b) comprise one of the following materials:
a. Carbon doped Alumina, in particular α-Al₂O₃:C;
b. Titan and Magnesium doped Lithium Fluorid, LiF:Ti, Mg
c. Dysprosium doped Calcium Fluorid, in particolar CaF₂:Dy

4. Detector according to any one of the preceding claims, **wherein** the bulk of the neutron moderating material (1) consists of or comprises polyethylene in pure form or with admixtures, in particular the bulk being in the form of a sphere or cylinder.

5. Detector according to any one of the preceding claims, **wherein** the housings (2) of the two sensor devices (3a, 3b) are formed as a bottom part having adjacent recesses for the sensor devices (3a, 3b) and a cover part, both parts consisting of or at least comprising a gamma ray attenuating material, in particular lead.

6. Detector according to any one of the preceding claims, **wherein** at least one optical fiber (6a, 6b) is fed through the housing (2) of each sensor device (3a, 3b), in particular also through additional cover material of each sensor device (3a, 3b) in particular also through the gadolinium cover (5) of the first sensor device (3a), in particular also through the bulk of neutron moderating material (1), one end of the at least one fiber (6a, 6b) facing one of the sensor devices (3a, 3b), the other end being connected / connectable to a light source and/or light detector.

7. Detector according to claim 6, **wherein** a reflective material is placed around the sensor devices (3a, 3b).

8. Method of detecting neutrons emerging from an area of interest to a neutron detector, in particular a detector according to any one of the preceding claims, comprising the following steps:
a. decelerating the neutrons to thermal energy by means of a moderator material (1);
b. attenuating the gamma rays emitted by the moderator material (1) during the deceleration, in particular by means of lead;
c. irradiating a first and a second sensor device (3a, 3b) which are both sensitive to gamma rays with the attenuated gamma rays;
d. capturing the thermalised/decelerated neutrons with Gadolinium (5) and producing gamma rays in a neutron-Gadolinium-interaction,
e. irradiating only the first sensor device (3a) and preventing irradiating of the second sensor device (3b) with the gamma rays produced in Gadolinium (5);
f. reading a signal proportional to the received total fluence of gamma rays from both sensor devices (3a, 3b).

9. Method according to claim 8 wherein the signals of first and second sensor devices (3a, 3b) are compared and generating an alarm signal dependent upon the result of comparision.

10. Method according to claim 8 or 9, wherein the signal of each of the two sensors devices (3a, 3b) is read by means of heating the respective sensor device (3a, 3b) which is composed of a thermoluminescent material.

11. Method according to claim 8 or 9, wherein the signal of each of the two sensors devices (3a, 3b) is read by means of irradiating the respective sensor with light and receiving fluorescent or luminescent light from the sensor device (3a, 3b) which is composed of an optically stimulatable material.

## Patentansprüche

1. Neutronendetektor, der aufweist:
a. eine erste (3a) und eine zweite (3b) Sensorvorrichtung, die beide gegenüber Gammastrahlen empfindlich sind;
b. wobei die erste Sensorvorrichtung (3a) mit Gadolinium (5) bedeckt ist;
c. wobei die bedeckte erste Sensorvorrichtung (3a) und die zweite Sensorvorrichtung (3b) jeweils in einem Gehäuse (2) angeordnet sind, das aus einem Gammastrahlung abschwächenden Material besteht oder mindestens ein solches Material aufweist, insbesondere Blei;
**dadurch gekennzeichnet, dass**:
d. die Gehäuse (2) von beiden Sensorvorrichtungen (3a, 3b) in einer Füllmasse von Material (1), das Neutronen abbremst, zueinander benachbart angeordnet sind, insbesondere in der Mitte dieser Füllmasse.

2. Detektor nach Anspruch 1, wobei die erste und die zweite Sensorvorrichtung (3a, 3b) dieselbe Empfindlichkeit gegenüber Gammastrahlen aufweisen, wobei insbesondere die erste und die zweite Sensorvorrichtung (3a, 3b) empirisch aus einer bestimmten Menge an Sensorvorrichtungen (3a, 3b) ausgewählt wurden.

3. Detektor nach einem der vorhergehenden Ansprüche, wobei die erste und die zweite Sensorvorrichtung (3a, 3b) eines der folgenden Materialien aufweisen:
a. mit Kohlenstoff dotiertes Aluminiumoxid, insbesondere α-Al₂O₃ : C;
b. mit Titan und Magnesium dotiertes Lithiumfluorid LiF:Ti, Mg;
c. mit Dysprosium dotiertes Calciumfluorid, insbesondere CaF₂:Dy

4. Detektor nach einem der vorhergehenden Ansprüche, wobei die Füllmasse von dem Material (1), das Neutronen abbremst, aus Polyethylen in reiner Form oder mit Zumischungen besteht oder dieses aufweist, wobei insbesondere die Füllmasse in der Form einer Kugel oder eines Zylinders vorliegt.

5. Detektor nach einem der vorhergehenden Ansprüche, wobei die Gehäuse (2) der zwei Sensorvorrichtungen (3a, 3b) als ein Bodenteil, das benachbarte Aussparungen für die Sensorvorrichtungen (3a, 3b) aufweist, und als ein Abdeckteil gebildet sind, wobei beide Teile aus einem Gammastrahlung abschwächenden Material bestehen oder mindestens ein solches Material aufweisen, insbesondere Blei.

6. Detektor nach einem der vorhergehenden Ansprüche, wobei mindestens eine optische Faser (6a, 6b) durch das Gehäuse (2) jeder Sensorvorrichtung (3a, 3b) hindurchgeführt wird, insbesondere auch durch das zusätzliche Abdeckmaterial jeder Sensorvorrichtung (3a, 3b), insbesondere auch durch die Gadoliniumabdeckung (5) der ersten Sensorvorrichtung (3a), insbesondere auch durch die Füllmasse von Material (1), das Neutronen abbremst, wobei ein Ende der mindestens einen Faser (6a, 6b) einer der Sensorvorrichtungen (3a, 3b) zugewandt ist und das andere Ende mit einer Lichtquelle und/oder einem Lichtdetektor verbunden ist/verbunden werden kann.

7. Detektor nach Anspruch 6, wobei ein reflektierendes Material um die Sensorvorrichtungen (3a, 3b) angeordnet ist.

8. Verfahren zum Nachweis von Neutronen, die aus einem Bereich von Interesse zu einem Neutronendetektor hervortreten, insbesondere zu einem Detektor nach einem der vorhergehenden Ansprüche, wobei das Verfahren die folgenden Schritte aufweist:
a. Abbremsen der Neutronen auf die thermische Energie mittels eines Moderatormaterials (1);
b. Abschwächen der Gammastrahlen, die von dem Moderatormaterial (1) während der Abbremsung emittiert werden, insbesondere mittels von Blei;
c. Bestrahlen einer ersten und einer zweiten Sensorvorrichtung (3a, 3b), die beide gegenüber Gammastrahlen empfindlich sind, mit den abgeschwächten Gammastrahlen;
d. Einfangen der thermalisierten/abgebremsten Neutronen mit Gadolinium (5) und Herstellen von Gammastrahlen in einer Neutron-Gadolinium-Wechselwirkung,
e. Bestrahlen nur der ersten Sensorvorrichtung (3a) und Verhindern des Bestrahlens der zweiten Sensorvorrichtung (3b) mit den Gammastrahlen, die in Gadolinium (5) hergestellt worden sind;
f. Ablesen eines Signals, das proportional zu der empfangenen Gesamtfluenz von Gammastrahlen von beiden Sensorvorrichtungen (3a, 3b) ist.

9. Verfahren nach Anspruch 8, wobei die Signale der ersten und der zweiten Sensorvorrichtung (3a, 3b) verglichen werden und in Abhängigkeit von dem Ergebnis des Vergleichs ein Alarm erzeugt wird.

10. Verfahren nach Anspruch 8 oder 9, wobei das Signal von jedem der zwei Sensorvorrichtungen (3a, 3b) mittels der Erwärmung der jeweiligen Sensorvorrichtung (3a, 3b), die aus einem Thermolumineszenzmaterial zusammengesetzt ist, abgelesen wird.

11. Verfahren nach Anspruch 8 oder 9, wobei das Signal von jedem der zwei Sensorvorrichtungen (3a, 3b) mittels des Bestrahlens des jeweiligen Sensors mit Licht und des Empfangens eines Fluoreszenzlichts oder Lumineszenzlichts aus der Sensorvorrichtung (3a, 3b), die aus einem optisch anregbaren Material zusammengesetzt ist, abgelesen wird.

## Revendications

1. Détecteur de neutrons comprenant :
a. un premier dispositif de détection (3a) et un second dispositif de détection (3b), les deux dispositifs étant sensibles aux rayonnements gamma ;
b. le premier dispositif de détection (3a) étant recouvert de gadolinium (5) ;
c. le premier dispositif de détection (3a) recouvert et le second dispositif de détection (3b) étant chacun placés dans un logement (2) constitué de, ou comprenant au moins, un matériau atténuant les rayonnements gamma, en particulier du plomb ; **caractérisé en ce que** :
d. les logements (2) des deux dispositifs de détection (3a, 3b) sont positionnés l'un à côté de l'autre dans une masse, en particulier au milieu d'une masse composée d'un matériau modérant les neutrons (1).

2. Détecteur selon la revendication 1, dans lequel les premier et second dispositifs de détection (3a, 3b) ont la même sensibilité aux rayonnements gamma, en particulier les premier et second dispositifs de détection (3a, 3b) étant sélectionnés empiriquement parmi une certaine quantité de dispositifs de détection (3a, 3b).

3. Détecteur selon l'une quelconque des revendications précédentes, dans lequel les premier et second dispositifs de détection (3a, 3b) comprennent un des matériaux suivantes :
a. de l'alumine dopée au carbone, en particulier du a-Al₂O₃: C ;
b. du fluorure de lithium dopé au titane et au magnésium, LiF:Ti, Mg
c. du fluorure de calcium dopé au dysprosium, en particulier du CaF₂:Dy.

4. Détecteur selon l'une quelconque des revendications précédentes, dans lequel la masse de matériau modérant les neutrons (1) consiste en, ou comprend, du polyéthylène sous forme pure ou avec des additifs, en particulier la masse ayant la forme d'une sphère ou d'un cylindre.

5. Détecteur selon l'une quelconque des revendications précédentes, dans lequel les logements (2) des deux dispositifs de détection (3a, 3b) sont formés sous la forme d'une partie inférieure ayant des renfoncements adjacents pour les dispositifs de détection (3a, 3b) et une partie de recouvrement, les deux parties consistant en, ou au moins comprenant un matériau atténuant les rayonnements gamma, en particulier du plomb.

6. Détecteur selon l'une quelconque des revendications précédentes, dans lequel au moins une fibre optique (6a, 6b) est alimentée par l'intermédiaire du logement (2) de chaque dispositif de détection (3a, 3b), en particulier également par l'intermédiaire d'un matériau de recouvrement additionnel de chaque dispositif de détection (3a, 3b), en particulier par l'intermédiaire de la partie de recouvrement en gadolinium (5) du premier dispositif de détection (3a), en particulier également par l'intermédiaire de la masse de matériau modérant les neutrons (1), une extrémité d'au moins une fibre (6a, 6b) faisant face à un des dispositifs de détection (3a, 3b), l'autre extrémité étant connectée/connectable à une source de lumière et/ou un détecteur de lumière.

7. Détecteur selon la revendication 6, dans lequel un matériau réfléchissant est placé autour des dispositifs de détection (3a, 3b).

8. Procédé de détection de neutrons émergeant d'une zone d'intérêt vers un détecteur de neutrons, en particulier un détecteur selon l'une quelconque des revendications précédentes, comprenant les étapes suivantes .
a. décélérer les neutrons à l'énergie thermique au moyen d'un matériau modérateur (1) ;
b. atténuer les rayonnements gamma émis par le matériau modérateur (1) au cours de la décélération, en particulier au moyen de plomb ;
c. irradier des premier et second dispositifs de détection (3a, 3b) qui sont tous les deux sensibles aux rayonnements gamma avec les rayonnements gamma atténués ;
d. capturer les neutrons thermalisés/décélérés avec du gadolinium (5) et produire des rayonnements gamma dans une interaction neutron-gadolinium,
e. irradier uniquement le premier dispositif de détection (3a) et empêcher l'irradiation du second dispositif de détection (3b) par les rayonnements gamma produits dans le gadolinium (5) ;
f. lire un signal proportionnel à la fluence totale reçu des rayonnements gamma provenant des deux dispositifs de détection (3a, 3b).

9. Procédé selon la revendication 8, dans lequel les signaux des premier et second dispositifs de détection (3a, 3b) sont comparés et le procédé comprend de générer un signal d'alarme dépendant du résultat de la comparaison.

10. Procédé selon la revendication 8 ou la revendication 9, dans lequel le signal de chacun des deux dispositifs de détection (3a, 3b) est lu en procédant au chauffage du dispositif de détection respectif (3a, 3b) qui est composé d'un matériau thermoluminescent.

11. Procédé selon la revendication 8 ou la revendication 9, dans lequel le signal de chacun des deux dispositifs de détection (3a, 3b) est lu en procédant à l'irradiation du détecteur respectif par de la lumière et en recevant la lumière fluorescente ou luminescente du dispositif de détection (3a, 3b) qui est composé d'un matériau optiquement approprié.
